# EUROPÄISCHE PATENTANMELDUNG

(11) **EP 1 004 981 A2**
(43) Veröffentlichungstag der Anmeldung: **31.05.2000**
(21) Anmeldenummer: 99122174.8
(22) Anmeldetag: 05.11.1999
(51) Int. Cl.: G06K 19/077

(54) **Chipkarte**

(30) Priorität: 18.11.1998 DE 19853144
(71) Anmelder: Orga Kartensysteme GmbH, 33104 Paderborn (DE)
(72) Erfinder: Janczek, Thies, 24220 Flintbek (DE)

(57) **Zusammenfassung**

Die Erfindung bezieht sich auf eine Chipkarte mit einem eine Vertiefung auf aufweisenden Kartenkörper zur Aufnahme eines Chipmoduls, wobei der Vertiefung (3, 10) ein fest mit dem Kartenkörper (1) verbundenes Stabilisierungselement (7, 11, 16) zugeordnet ist.

## Beschreibung

Die Erfindung betrifft eine Chipkarte nach dem Oberbegriff des Patentanspruchs 1.

Aus der DE 196 37 215 A1 ist eine Chipkarte mit einem Chipmodul bekannt, das einen Versteifungsrahmen aufweist. Hierdurch soll gewährleistet sein, daß der auf dem Chipmodul befindliche Chip mechanisch zuverlässig und verwindungssteif in eine Vertiefung eines Kartenkörpers eingebracht ist. Nachteilig an der bekannten Chipkarte ist, daß der Versteifungsrahmen zusammen mit einem üblicherweise als Zwischenerzeugnis angelieferten Trägerband bereitgehalten werden muß, bevor unter Bildung des Chipmoduls dasselbe in die Vertiefung des Kartenkörper implantiert wird. Aufgrund des vorgegebenen Dimensionierung des Versteifungsrahmens ist auch die Dimension der Vertiefung des Kartenkörper festgelegt und kann nicht mehr geändert werden.

Aufgabe der Erfindung ist es daher, eine Chipkarte derart weiterzubilden, daß die Herstellung einer verwindungssteifen Chipkarte vereinfacht wird, wobei die Implantation eines Chipmoduls in den Kartenkörper unabhängig von der Kontur des Chipmoduls erfolgen kann.

Zur Lösung dieser Aufgabe weist die Erfindung die Merkmale des Patentanspruchs 1 auf.

Der besondere Vorteil der Erfindung ist darin zu sehen, daß eine Versteifung der Chipkarte herbeigeführt werden kann, die unabhängig von der Dimension des Chipmoduls ist. Dieses kann auf der der Vertiefung des Kartenkörpers zugekehrten Seite eine beliebige Kontur aufweisen. Durch das Anbringen eines Stabilisierungselements an dem Kartenkörper ändert sich lediglich die Dimension des Kartenkörpers. Die Kontur der Vertiefung kann fest vorgegeben sein, wobei durch unterschiedliche Ausführungen des Stabilisierungselements die Chipkarte unterschiedliche mechanische Eigenschaften aufweisen kann.

Nach einer Weiterbildung der Erfindung ist das Stabilisierungselement in den Kartenkörper eingefaßt und schließt bündig mit der vorgegebenen Kontur der Vertiefung ab. Das Stabilisierungselement kann ringförmig um eine Senke der Vertiefung angeordnet sein, in der der Chip stoffschlüssig gelagert ist.

Nach einer Weiterbildung der Erfindung ist das Stabilisierungselement aus einem biegefesteren Werkstoff als der Werkstoff des Kartenkörpers. Durch Umspritzung des Stabilisierungselements mittels eines Kunststoffwerkstoffs kann das Stabilisierungselement in den Kartenkörper integriert werden. Hierdurch wird eine kostengünstige Einbindung des Stabilisierungselements in die Chipkarte ermöglicht.

Nach einer Weiterbildung der Erfindung erstreckt sich das Stabilisierungselement auf einer dem Chipmodul zugewandten Seite einer Senke der Vertiefung. Hierdurch wird ein kritischer dünner Bereich des Kartenkörpers stabilisiert.

Nach einer Weiterbildung der Erfindung ist das Stabilisierungselement wannenförmig ausgebildet und erstreckt sich vollständig entlang einer dem Chipmodul zugewandten Oberfläche der Vertiefung. Hierdurch wird eine gleichmäßige Versteifung im Einbettungsbereich des Chipmoduls erzielt.

Weitere Vorteile ergeben sich aus den weiteren Unteransprüchen.

Ausführungsbeispiele der Erfindung werden nachfolgend anhand der Zeichnungen näher erläutert.

Es zeigen:
- Fig.1: einen Längsschnitt eines Kartenkörpers mit einem Stabilisierungselement nach einem ersten Ausführungsbeispiel,
- Fig.2: eine Draufsicht auf eine Vertiefung eines Kartenkörpers mit einem Stabilisierungselement nach einem zweiten Ausführungsbeispiel,
- Fig.3: einen teilweisen Längsschnitt durch den Kartenkörper entlang der Linie III - III gemäß Fig. 2 und
- Fig.4: einen Längsschnitt durch ein Stabilisierungselement nach einem dritten Ausführungsbeispiel.

Eine Chipkarte besteht im wesentlichen aus einem Kartenkörper 1 und einem Chipmodul 2, das in eine Vertiefung 3 des Kartenkörpers 1 implantiert ist. Das Chipmodul 2 ist im Querschnitt stufenförmig ausgebildet und weist auf der einen, der Vertiefung 3 abgewandten Seite eine ebene Kontaktfläche 4 und auf der anderen, der Vertiefung zugewandten Seite einen Chip 5 auf. Die Kontaktfläche 4 schließt im montierten Zustand bündig mit einer Oberfläche des Kartenkörpers 1 ab. Der Chip 5 ist in einem mittleren Bereich des Chipmoduls 2 angeordnet und ist in einer Senke 6 der Vertiefung 3 eingefaßt. In diesem Bereich hat der Kartenkörper 1 seine geringste Quererstreckung.

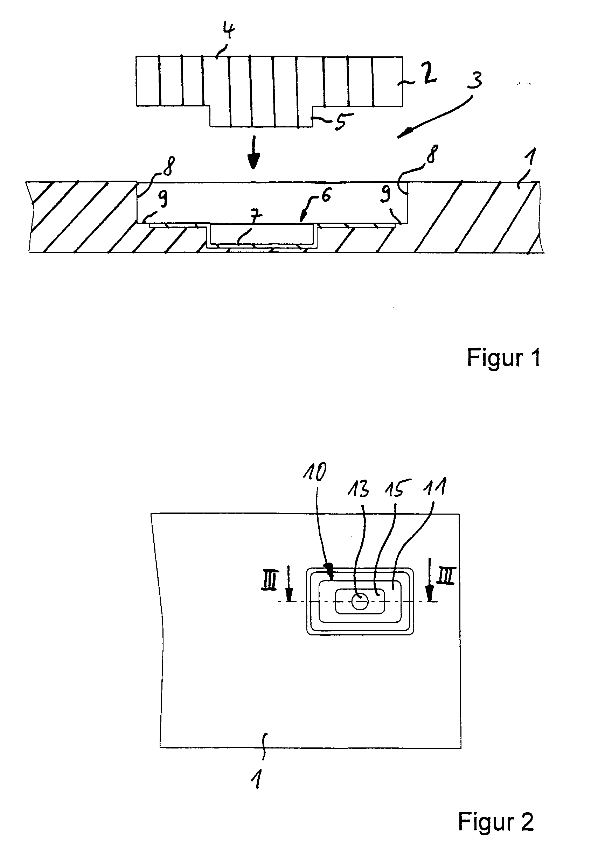

Nach einer ersten Ausführungsform des Kartenkörpers 1 gemäß Fig. 1 ist die Vertiefung 3 mit einem wannenförmigen Stabilisierungselement 7 versehen, das eine Oberfläche der Vertiefung 3 bildet. Dabei erstreckt sich das Stabilisierungselement 7 zwischen gegenüberliegenden senkrechten Flanken oder Außenwänden 8, an die sich nach unten jeweils eine vorspringende Nase 9 anschließt. Benachbart und bündig zu der Oberseite der Nase 9 schließt sich das Stabilisierungselement 7 an und bedeckt unter Einschluß der Senke 6 den gesamten von der umlaufenden Nase 9 eingefaßten Oberflächenbereich der Vertiefung 3.

Das Stabilisierungselement 7 besteht aus einem vergleichsweise zu dem Material des Kartenkörpers 1 biegesteiferen Material, vorzugsweise aus einem Kupfermaterial. Vorteilhaft kann die Chipkarte durch Umspritzen des vorgeformten Stabilisierungselements 7 hergestellt werden. Dabei wirkt das Stabilisierungselement 7 unterstützend zur Bildung einer homogenen Materialzone des Kartenkörpers 1 im Bereich der Senke 6. Weiterhin wird ein Schutz vor Manipulation der Chipkarte an der dünnsten Stelle (Senke 6) gewährleistet. Dadurch, daß das Stabilisierungselement 7 metallisch und flächig ausgebildet ist, wird eine Art 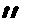 Faraday'scher Käfig" geschaffen, der die elektromagnetische Verträglichkeit der Chipkarte verbesesert.

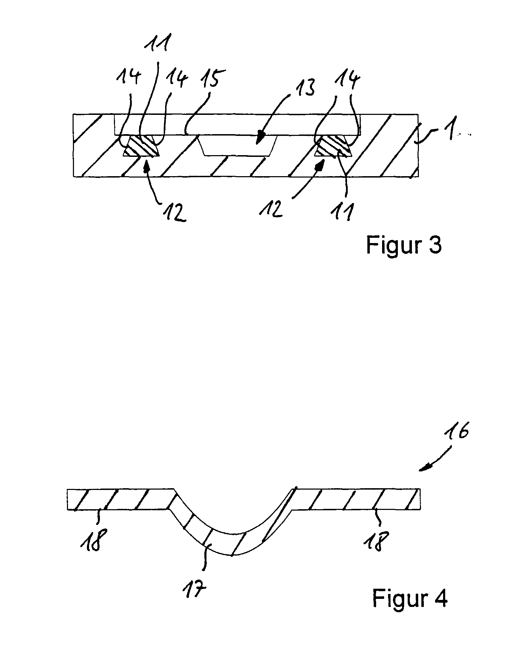

Nach einem zweiten Ausführungsbeispiel der Chipkarte gemäß Fig. 2 und 3 ist einer Vertiefung 10 ein ringförmiges Stabilisierungselement 11 zugeordnet, das sich rahmenartig in einer Nut 12 der Vertiefung 10 um eine den Chip 5 aufnehmenden Senke 13 derselben erstreckt. Die Nut 12 weist sich zum Chipmodul 2 hin verjüngende Wände 14 auf, so daß das Stabilisierungselement 11 sich in derselben gehalten ist. Die Oberseite des Stabilisierungselements 11 schließt bündig mit einer die Senke 13 umgebenden Außenfläche 15 der Vertiefung 10 ab.

Nach einem dritten Ausführungsbeispiel der Chipkarte gemäß Fig. 4 ist ein konkavförmiges Stabilisierungselement 16 vorgesehen, das in einem mittleren Bereich 17 konkavförmig oder gewölbt und nach außen hin eben und flach ausgebildet ist. Diese ebenen Lappen 18 liegen flächig auf der Außenfläche 15 der Vertiefung 10 an. Durch die gewölbte Form des mittleren Bereichs 17 kann eine erhöhte Steifigkeit der Chipkarte erzielt werden.

## Patentansprüche

1. Chipkarte mit einem eine Vertiefung auf aufweisenden Kartenkörper zur Aufnahme eines Chipmoduls, dadurch gekennzeichnet, daß der Vertiefung (3, 10) ein fest mit dem Kartenkörper (1) verbundenes Stabilisierungselement (7, 11, 16) zugeordnet ist.

2. Chipkarte nach Anspruch 1, dadurch gekennzeichnet, daß das Stabilisierungselement (7, 11, 16) eine Senke (6, 13) der Vertiefung (3, 10) abdeckt.

3. Chipkarte nach Anspruch 1 oder 2, dadurch gekennzeichnet, daß das Stabilisierungselement (7, 11, 16) zumindest teilweise eine Oberfläche der Vertiefung (3, 10) bildet.

4. Chipkarte nach einem der Ansprüche 1 bis 3, dadurch gekennzeichnet, daß sich das Stabilisierungselement (7, 11) zwischen seitlichen Flanken (8) der Vertiefung (3, 10) wannenförmig erstreckt.

5. Chipkarte nach Anspruch 4, dadurch gekennzeichnet, daß das Stabilisierungselement (7, 11) stufenförmig ausgebildet ist, wobei die Kontur der zu dem Chipmodul (2) zugewandten Seite des Stabilisierungselements (7, 11) der Kontur des einzubettenden Chipmoduls (2) angepaßt ist.

6. Chipkarte nach einem der Ansprüche 1 bis 5, dadurch gekennzeichnet, daß das Stabilisierungselement (16) in einem mittleren Bereich (17) konkavförmig ausgebildet ist.

7. Chipkarte nach Anspruch 1 oder 2, dadurch gekennzeichnet, daß das Stabilisierungselement (11) in einer Nut (12) der Vertiefung (10) eingeformt ist und sich rahmenartig um eine Senke (13) der Vertiefung (10) erstreckt.

8. Chipkarte nach einem der Ansprüche 1 bis 7, dadurch gekennzeichnet, daß das Stabilisierungselement(7, 11, 16) aus einem Material besteht, daß eine größere Biegefestigkeit aufweist als das Material des Kartenkörpers (1).

9. Chipkarte nach Anspruch 8, dadurch gekennzeichnet, daß das Stabilisierungselement (7, 11, 16) aus einem Metallwerkstoff, insbesondere aus Kupfer, besteht.
